# EUROPÄISCHE PATENTANMELDUNG

(11) **EP 1 538 378 A1**
(43) Veröffentlichungstag der Anmeldung: **08.06.2005**
(21) Anmeldenummer: 03027666.1
(22) Anmeldetag: 03.12.2003
(51) Int. Cl.: F16K 31/40, F16K 31/385

(54) **Stellglied**

(71) Anmelder: SANIMATIC AG, 8954 Geroldswil (CH)
(72) Erfinder: Yuste, Francisco, 8046 Zürich (CH); Furegati, Renato, 8953 Dietikon (CH)
(74) Vertreter: Patentanwälte Schaad, Balass, Menzl & Partner AG

(57) **Zusammenfassung**

Ein erfindungsgemässes Stellglied zum Einstellen eines Flusses von Medien mit mindestens einem Ventil (10, 10'), das gesteuert ist durch einen hydraulischen oder pneumatischen Steuerkreis mit einem Pilotventil (12, 12'), dessen Verschlussteil (36) lediglich zwei Ruhestellungen einnehmen kann, und einem Servoraum (44), zeichnet sich dadurch aus, dass das Verschlusselement (36) des Ventils (10, 10') durch zeitlich modulierte Steuersignale für das Pilotventil (12, 12') eine quasistationäre Stellung zwischen der geschlossenen Stellung und offenen Stellung einzunehmen imstande ist. Dabei sind die Steuersignale für das Pilotventil (12, 12') zeitlich mit einer Frequenz moduliert, die höher, vorzugsweise um ein Vielfaches höher, ist, als das Inverse der Dauer eines Öffnungs- und Schliessvorganges des Ventils (10, 10'). Das Stellglied ist vorzugsweise mit einem membran- oder kolbenförmig ausgebildeten Verschlusselement (36), an welchem stromabwärts ein Schliesskörper (32) befestigt ist, ausgebildet. Um mögliche Durchflussschwankungen in der quasistationären Stellung zu verkleinern, sind die Reaktionen des Verschlusselements des Ventils (10, 10') durch ein besonders grosses Volumen des Servoraums (44), eine verkleinerte Durchführung (56) beim Zufluss und eine Verbindung (58) mit kleinem Innendurchmesser zum Abfluss des Mediums aus dem Servoraum (44) und einen durch Formgebung und Grösse angepassten Strömungswiderstand eines stromabwärts am Verschlusselement (36) befestigten Schliesskörpers (32) verzögert.

## Beschreibung

### Stellglied

Die Erfindung betrifft ein Stellglied gemäss Anspruch 1 und ein Verfahren zum Betrieb eines solchen Stellgliedes entsprechend Anspruch 15.

Stellglieder zum Einstellen des Durchflusses von gasförmigen und flüssigen Medien sind allgemein bekannt. Sie können mit einem pneumatischen oder hydraulischen Steuerkreis ausgestattet sein, der ein Pilot- oder Hilfsventil aufweist.

Ein Stellglied in einer Ausführung mit einem pilotgesteuerten Membranventil ist beispielsweise aus EP-A-432552 bekannt. Pilotgesteuerte Membranventile zeichnen sich im allgemeinen dadurch aus, dass durch ein elastisches Verschlusselement, beispielsweise eine Membran, stossartige Druckveränderungen, die sich aufgrund von Öffnungs- und Schliessvorgängen des Stellgliedes in den Medien ausbreiten, weitgehend vermieden werden. In dem oben genannten Dokument wird eine sanitäre Armatur für das Bereitstellen von Mischwasser mit zwei Membranventilen, die mittels Hilfs- oder Pilotventilen gesteuert werden, offenbart.

Generell basiert die Wirkungsweise eines pilotgesteuerten Ventils darauf, dass in einem Vorsteuer- oder Servoraum eines hydraulischen oder pneumatischen Steuerkreises ein Flüssigkeits- beziehungsweise Gasdruck durch eine Verbindung zum Zufluss des Mediums aufgebaut ist. Eine Wand des Servoraums ist dabei als ein Verschlusselement des Ventils, zum Beispiel als elastische Membran, ausgeführt. Durch steuerbare Pilotventile kann der Abfluss aus und damit der Druck im Servoraum eingestellt werden. Ein Gegendruck, der auf das Verschlusselement durch den Zufluss des Mediums ausgeübt wird, erzeugt eine Gegenkraft. Die resultierende Nettokraft führt nun zum Abheben oder Anlegen des Verschlusselementes an einen Ventilsitz des Ventils, wodurch der entsprechende Durchfluss eingestellt ist.

Die Steuerung der Pilot- oder Hilfsventile kann beispielsweise, wie im vorgängig erwähnten Dokument beschrieben, durch mechanische Vorrichtungen, die von Hand betätigt werden, erfolgen. Dabei wird das Verschlussteil des Pilotventils, beispielsweise ein Pilotventilstempel, und in dessen Folge das Verschlusselement des Ventils mechanisch in eine Zwischenstellung zwischen der offenen und geschlossenen Stellung gezwungen. Diese Ausführungsform hat einen komplizierten Aufbau und erfordert eine relativ grosse Anzahl bewegter Teile. Ebenfalls bekannt als Antriebselemente der Pilotventile sind Elektromagnete oder Stellmotore. Während Elektromagnete ausschliesslich die Ansteuerung der Verschlussteile in eine offene oder geschlossene Stellung ermöglichen, können Stellmotore die Einnahme einer Anzahl von Zwischenstellungen der Verschlussteile bewirken.

Für die präzise Einstellung eines Durchflusses, beispielsweise für die Einstellung eines Mischverhältnisses bei der Mischwasserbereitstellung, ist die kostengünstige Ausführung der Pilotventilsteuerung mittels Elektromagnete aufgrund der lediglich zwei ansteuerbaren Stellpositionen, wie bei einem Absperrglied, nur begrenzt geeignet. Ausführungen mit Stellantrieben, die mehrere Stellpositionen einnehmen können, sind wiederum vergleichsweise kostenintensiv.

Daher liegt der Erfindung die Aufgabe zu Grunde, ein Stellglied bereitzustellen, welches eine präzise Durchflusssteuerung von Medien ermöglicht und zugleich kostengünstig herstellbar ist.

Erfindungsgemäss wird diese Aufgabe durch ein Stellglied und ein Verfahren zum Betrieb davon mit den in Anspruch 1 bzw. 15 beschriebenen Merkmalen gelöst.

Besonders bevorzugte Ausbildungsformen der Vorrichtung sind in den abhängigen Ansprüchen, der Beschreibung und den Zeichnungen angegeben.

Der Grundgedanke der erfindungsgemässen Vorrichtung bzw. des Verfahrens besteht darin, dass ein Verschlusselement eines über einen hydraulischen oder pneumatischen Steuerkreis betätigten Ventils durch intermittierende Ansteuerung des Pilotventils des Steuerkreises eine quasistationäre Zwischenstellung einnimmt. Intermittierende Ansteuerung bedeutet in diesem Fall, dass über das Pilotventil und damit den Steuerkreis abwechselnd Öffnungs- und Schliessvorgänge des Ventils, beispielsweise eines Membranventils, ausgelöst werden. Aufgrund wesentlich kürzerer Zeiten zwischen der Auslösung eines Öffnungs- bzw. eines Schliessvorgangs im Steuerkreis im Vergleich zur Öffnungs- und Verschlusszeit des Ventils, verbleibt das Verschlusselement in einer quasistationären Zwischenstellung. Die Öffnungs- bzw. Verschlusszeit des Ventils ist gegeben durch die Zeitdauer, innerhalb dieser das Verschlusselement des Ventils nach Betätigung des Pilotventils von der geschlossenen in die offene Stellung bzw. umgekehrt übergeht. Eine quasistationäre Stellung ist eine Schwebestellung des Verschlusselements, die mit kleinen Schwankungen schnell um eine Mittelstellung variiert.

Der Durchfluss bei einer quasistationären Stellung des Verschlusselements ist charakterisiert durch einen zeitlichen Mittelwert, unter Umständen mit aufgeprägten schnellen Oszillationen, hervorgerufen durch die schnell oszillierende Auslösung von Öffnungs- und Schliessvorgängen im Steuerkreis. Die Amplituden der schnellen Durchflussschwankungen sind dabei klein gegen den Mittelwert des Durchflusses.

Um die Durchflussschwankungen in der quasistationären Stellung zu verkleinern, sind die Reaktionen des Verschlusselements des Ventils durch entsprechende technische Massnahmen verlangsamt bzw. gedämpft. Dazu gehört eine Ausstattung des Servoraums mit einem besonders grossen Volumen und eine Verkleinerung der Durchflussöffnungen zum Zufluss und Abfluss des Mediums aus dem Servoraum. Alternativ oder zusätzlich ist der Strömungswiderstand durch Formgebung und Grösse eines stromabwärts am Verschlusselement befestigten Schliesskörpers während des Anlegens bzw. Abhebens der Membran vergrössert.

Eine Ausführungsform der Erfindung wird anhand der folgenden Zeichnungen beschrieben. Die Zeichnungen zeigen:
- Fig. 1: Schnittbild eines Stellgliedes in der Ausführung als Mischarmatur mit zwei pilotgesteuerten Membranventilen,
- Fig. 2: Schnitt durch einen an einer Membran befestigten, halbkugelförmigen Schliesskörper,
- Fig. 3: Schnitt durch einen an einer Membran befestigten, kegelstumpfförmigen Schliesskörper,
- Fig. 4: Schnitt durch einen an einer Membran befestigten, kegelstumpfförmigen Schliesskörper mit konkaver Mantelfläche,
- Fig. 5: Schnitt durch einen an einer Membran befestigten Schliesskörper in Form eines membranseitig geschlossenen Hohlzylinders und
- Fig. 6: Schnitt durch einen an einer Membran befestigten Schliesskörper mit trapezförmigen Flügeln.

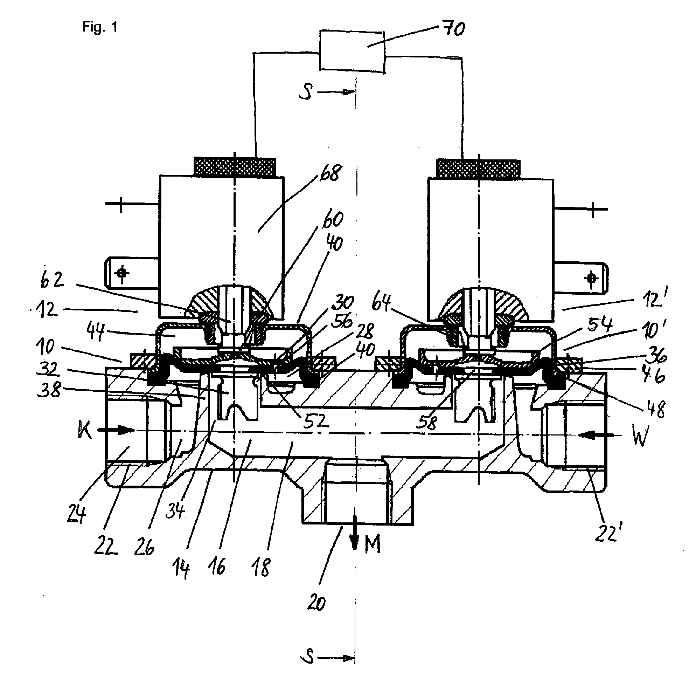

In Fig. 1 ist ein erfindungsgemässes Stellglied in einer Ausführung als Mischarmatur mit einer Anordnung von zwei Membranventilen 10, 10' mit je einem Pilotventil 12, 12' für die Bereitstellung von Mischwasser aus Kalt- und Warmwasser dargestellt.

An einem T-förmigen Gehäuse 14 mit einem Kaltwasserzufluss K, einem gegenüberliegenden, entgegen dem Kaltwasserzufluss K gerichteten Warmwasserzufluss W und einem Mischwasserausfluss M, der radial von einem Durchflusskanal 16 entlang einer Symmetrieebene S - S Mischwasser wegleitet, sind zwei gleichartige pilotgesteuerte Membranventile 10, 10' angeordnet. Durch das Membranventil 10 wird dabei der Kaltwasserzufluss K und durch das mit 10' bezeichnete Ventil der Warmwasserzufluss W in einen Mischkanal 18 mit anschliessendem Ausfluss 20 gesteuert. Für eine dichte Verbindung zu einem in bekannter Weise ausgeführten Leitungssystem, sind die Endabschnitte des Gehäuses 14 an den Zuflüssen für Kalt- und Warmwasser K, W beziehungsweise dem Ausfluss 20 für Mischwasser mit Innengewinden 22, 22' ausgestattet.

Die in Fig. 1 gezeigte Anordnung ist spiegelsymmetrisch bezüglich der mit S - S bezeichneten Ebene aufgebaut, weshalb im weiteren nur eines der Membranventile 10, 10' im Detail beschrieben wird. Da die beiden Membranventile 10, 10' unabhängig von einander funktionieren, ist es auch denkbar, eines der Membranventile 10, 10' durch ein Stellventil anderer Art zu ersetzen.

Ein Zuflussabschnitt 24 des vom Gehäuse 14 umgebenen Durchflusskanals 16 wird stromabwärts zunächst in einen nahezu senkrecht zur Strömungsrichtung des Kaltbeziehungsweise Warmwasserzuflusses K, W verlaufenden, im Gehäuse 14 abgewinkelten Kanalabschnitt 26 geführt und in einen Ringkanal 28 geleitet. Dieser Ringkanal 28 ist an der äusseren Wand des Gehäuses 14 ausgebildet. Der Ringkanal 28 umgibt eine Öffnung 30 in der Wand des Gehäuses 14. Der Ringkanal 28 und die Öffnung 30 sind im Inneren des Gehäuses 14 durch eine Wandung 38 voneinander getrennt. Die Öffnung 30 setzt sich zylindrisch fort in einer weiteren Abwinkelung 34, die den Durchflusskanal 16 wieder nahezu in die Strömungsrichtung des Kaltbeziehungsweise Warmwasserzuflusses K, W führt und in den Mischkanal 18 übergeht.

Der nach aussen offene Ringkanal 28 und die vom Ringkanal 28 umgebene Öffnung 30 werden von einer hutförmigen Membran 36 überspannt. Die Membran 36 ist in einer äusseren, radial am weitesten von der Öffnung 30 entfernten Gehäusewandung 40 des Ringkanals 28 dicht geklemmt. Die dichte Klemmung der Membran 36 an der Gehäusewandung 40 erfolgt durch einen aufgesetzten, topfförmigen Deckel 42, welcher mit der Seite der Membran 36, die nicht am Gehäuse 14 anliegen kann, einen Servoraum 44 umschliesst. Das Pilotventil 12, 12' und der Servoraum 44 bilden einen hydraulischen Steuerkreis. Der Deckel 42 ist durch einen Ring 46, der teilweise auf einem äusseren Falz 48 des Deckels 42 und teilweise auf dem Gehäuse 14 aufliegt, derart am Gehäuse 14 befestigt, dass die Membran 36 fest in die Gehäusewandung 40 des Ringkanals 28 gepresst wird.

Ein Schliesskörper 32 mit zylindrischer Form ist an seiner kreisförmigen Grundfläche zentrisch mit der Membran 36 fest verbunden und befindet sich stromabwärts nahezu vollständig beweglich in der vom Ringkanal 28 umgebenen Öffnung 30 und der zylindrischen Abwinklung 34.

Die Wandung 38, welche den Ringkanal 28 und die Öffnung 30 trennt, ist auf der Gehäuseaussenseite abgeflacht und bildet dort einen Ventilsitz 52 für die Membran 36. Liegt nun die Membran 36 an diesem Ventilsitz 52 an und befindet sich der Schliesskörper 32 somit vollständig in der Öffnung 30, so ist der Ringkanal 28 gegenüber der Öffnung 30 dicht verschlossen und Wasser kann aus dem Kalt- bzw. Warmwasserzufluss K, W nicht in den Mischkanal 18 strömen. Hebt die Membran 36 hingegen von ihrem Ventilsitz 52 ab, so ist der Ringkanal 28 über den entstehenden Raum mit der Öffnung 30 verbunden und Wasser kann je nach Abhub der Membran 36 in den Mischkanal 18 fliessen. Das Verhältnis des Durchflusses von Warm- und Kaltwasser und deren Temperaturen bestimmen den Durchfluss und die Temperatur des Mischwassers, welches über den Ausfluss 20 das Stellglied verlässt.

Aus Stabilitätsgründen ist die Membran 36 auf der nicht dem Gehäuse 14 zugewandten Seite mit einer stempelartigen Verstärkung 54, die einen nahezu U-förmigen Querschnitt besitzt, aus Metall oder Kunststoff versehen. Die Membran 36 und die Verstärkung 54 weisen eine Durchführung 56 vom Ringkanal 28 in den Servoraum 44 auf. Die Durchführung 56 ermöglicht jederzeit den Zufluss von Wasser in den Servoraum 44 und bewirkt dadurch, dass sich im Servoraum 44 der gleiche Druck des Wassers aufbaut, wie im Zuflussabschnitt 24 des Durchflusskanals 16.

Die Verstärkung 54, die Membran 36 und der Schliesskörper 32 sind zentrisch auf einer rohrartigen Verbindung 58 fest angeordnet. Auf der dem Servoraum 44 zugewandten Seite ist die rohrartige Verbindung 58 zu einem Pilotventilsitz 60 ausgebildet.

Mit dem Pilotventilsitz 60 wirkt ein entsprechender Pilotventilstempel 62 zusammen, der beweglich in einer Hülse 64 geführt ist und mittels einer nicht dargestellten Feder in Richtung des Pilotventilsitzes 60 vorgespannt ist. Die Hülse 64 ist zentrisch im Deckel 42, direkt gegenüber dem Pilotventilsitz 60, befestigt. Durch eine Dichtung 66, die zwischen der Hülse 64 und einem am Deckel 42 befestigten Elektromagneten 68 eingespannt ist und den Pilotventilstempel 62 dicht umschliesst, wird der Austritt von Wasser aus dem Servoraum 44 in die Umgebung verhindert.

Der Pilotventilstempel 62 wird durch den Elektromagneten 68 in eine offene bzw. geschlossene Stellung gebracht. Der Elektromagnet 68 ist elektrisch mit einer Steuereinheit 70 verbunden, welche die Steuersignale erzeugt. Es ist möglich, die Steuereinheit 70 mit einer Schnittstelle zu versehen, so dass beispielsweise die Pulsbreite der Steuersignale extern vorgegeben werden kann. Die Steuereinheit 70 kann mit einem Mikroprozessor ausgestattet sein. Ausserdem ist es möglich, die Steuereinheit 70 in einen Regelkreis zu integrieren, so dass im Zusammenwirken mit einen im Mischkanal 18 oder am Ausfluss 20 angebrachten Temperatursensor die Mischwassertemperatur geregelt wird.

Erhält das Pilotventil 12, 12' ein Steuersignal zum Öffnen des Membranventils 10, 10', so wird der Pilotventilstempel 62, der fest mit dem bewegbaren Kern des Elektromagneten 68 verbunden ist, vom Pilotventilsitz 60 abgehoben und Wasser kann aus dem Servoraum 44 durch die rohrförmige Verbindung 58 in den Mischkanal 18 fliessen. Die resultierende Verminderung des Wasserdrucks im Servoraum 44 führt zum Abheben der Membran 36 von ihrem Ventilsitz 52 und in Folge dessen in der vorgängig beschriebenen Weise zum Strömen des Wasser vom Ringkanal 28 durch die Öffnung 30 in den Mischkanal 18.

Bei einem Steuersignal zum Schliessen des Membranventils 10, 10' wird der Pilotventilstempel 62 auf den Pilotventilsitz 60 gepresst, so dass Wasser aus dem Servoraum 44 nicht durch die Verbindung 58 in den Mischkanal 18 fliessen kann. Die resultierende Erhöhung bzw. Aufrechterhaltung des Wasserdrucks im Servoraum 44 führt zum Anliegen der Membran 36 an ihren Ventilsitz 52, so dass keine Wasser vom Ringkanal 28 durch die Öffnung 30 in den Mischkanal 18 fliessen kann.

Die Zeit zum vollständigen Abheben bzw. Anlegen der Membran 36 von bzw. an ihren Ventilsitz 52, dass heisst die Zeit zum Öffnen und Schliessen des Membranventils 10, 10', wird durch folgende Parameter beeinflusst:
- das Verhältnis der vom Wasser im Rinakanal 28 angeströmten Fläche der Membran 36 zur Fläche der Membran 36, die Teil des Servoraums 44 ist,
- das Durchflussverhältnis des in den Servoraum 44 durch die Durchführung 56 einströmenden und durch die Verbindung 58 zum Mischkanal 18 ausströmenden Wassers,
- von der Kraft, die der Pilotventilstempel 62 auf den Pilotventilsitz 60 und damit auf die Membran 36 ausübt und
- die Form des Schliesskörpers 32.

Die Einstellung eines bestimmten Flusses, insbesondere eines Flusses der zwischen einem maximalen Durchfluss, bei vollständig abgehobener Membran 36, und keinem Durchfluss, bei vollständig anliegender Membran 36, ist dadurch ermöglicht, dass bei Erreichen des einzustellenden Durchflusses in schneller Abfolge Steuersignale zum Öffnen und Schliessen (bzw. umgekehrt) an das Pilotventil 12, 12' übermittelt werden. Die Zeitdauer zwischen einem Signal zum Öffnen bzw. Schliessen liegt typisch zwischen 20 ms und 100 ms.

In Folge der intermittierenden Öffnungs- und Schliesssignale schwankt der Druck im Servoraum 44 geringfügig um einen Mittelwert und führt zu einer quasistationären Stellung der Membran 36, also einem Schwebezustand in einer Zwischenstellung. Daraus resultierend bleibt der Durchfluss des Membranventils 10, 10' im zeitlichen Mittel konstant, schwankt jedoch möglicherweise leicht um diesen. Je höher die Frequenz der intermittierenden Signalfolge ist oder je langsamer bzw. träger die Membran 36 auf die Zustände im Servoraum 44 reagiert, um so geringer sind die Durchflussschwankungen.

Erfindungsgemäss sind die oben genannten Parameter wie folgt eingestellt:
- das Flächenverhältnis von durch den Ringkanal 28 angeströmter zur Fläche der Membran 36 im Servoraumes 44 beträgt zwischen 0,6 und 0,9;
- das Durchflussverhältnis von ein- und ausströmendem Wasser des Servoraums 44 beträgt bei geöffnetem Pilotventil 12, 12' zwischen 0,7 und 0,9;
- der Pilotventilstempel 62 ist in Richtung des Pilotventilsitzes 60 vorgespannt und
- der Schliesskörper 32 vermindert aufgrund seiner Grösse und Formgebung den Durchfluss von Wasser durch das Membranventil 10, 10' bei nur geringfügig abgehobener Membran 36.

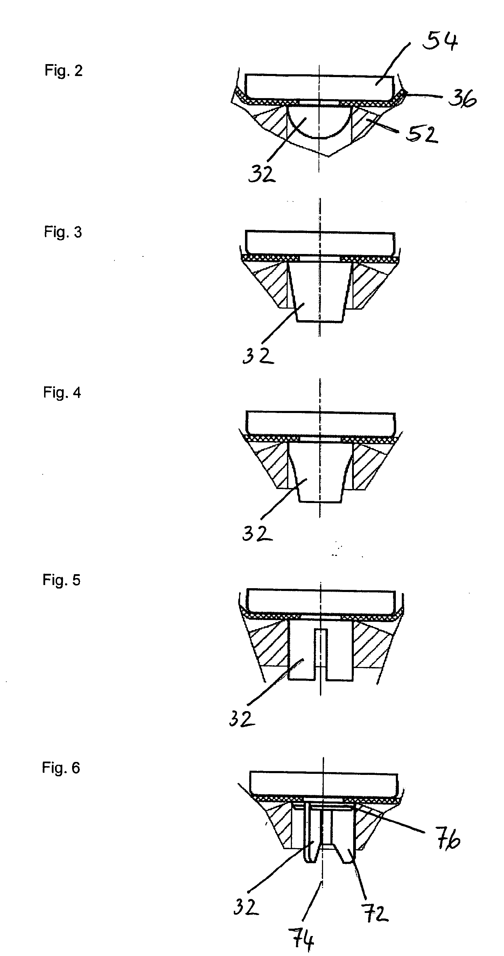

Verschiedene Formen erfindungsgemässer Schliesskörper 32 sind in Fig. 2 bis Fig. 6 dargestellt.

Der Schliesskörper 32 in Fig. 2 ist als Halbkugel, in Fig. 3 als Kegelstumpf geformt. In Fig. 4 ist ein zylindrisch geformter Schliesskörper 32 mit einer konkaven Mantelfläche ausgestattet. Alternativ kann sowohl ein Teil, wie auch die gesamte Mantelfläche konvex sein.

In Fig. 5 ist ein Schliesskörper 32 dargestellt, der die Form eines geschlitzten Zylinders mit membranseitig, also stromaufwärts geschlossener Grundfläche hat.

Fig. 6 zeigt eine Ausführungsform des Schliesskörpers 32 mit einer tellerförmigen Grundfläche 74 und trapezförmigen Flügeln 72, die radial von einer Achse 74, welche nahezu senkrecht auf der Grundfläche 74 steht und durch den Tellermittelpunkt verläuft, wegstehen.

Die Schliesskörper 32 sind aus einem nicht löslichen und nicht korrodierendem Material, beispielsweise Kunststoff, Keramik, Glas oder einer nicht rostenden Metalllegierung, hergestellt.

In der in Fig. 1 gezeigten Ausführungsform des Stellgliedes als Mischarmatur ist es natürlich möglich, die Ventile mit Schliesskörpern 32 verschiedener Form auszustatten. Die Abmasse der Schliesskörper 32 können ebenfalls zwischen verschiedenen Ventilen variieren.

Beim Einstellen der quasistationären Stellung der in Fig. 2 gezeigten Ausführung des Stellgliedes als Mischarmatur gibt es zwei besonders vorteilhafte zeitliche Beziehungen zwischen den Steuersignalen für die beiden Pilotventile 12, 12'. Zum einen kann die intermittierende Folge von Öffnungs- und Schliessvorgängen zum Betrieb in der quasistationären Stellung für beide Pilotventile 12, 12' gegenläufig sei. Das bedeutet das beispielsweise das Pilotventil 12, welches mit dem Membranventil 10 zusammenwirkend den Kaltwasserzufluss K steuert, sich in der Öffnungsstellung befindet, während sich gleichzeitig das Pilotventil 12' für den Warmwasserzufluss W in der geschlossenen Stellung befindet. Öffnungs- und Schliesssignale wechseln sich damit nicht nur zeitlich ab, sondern sind auch zwischen den beiden Pilotventilen 12, 12' stets verschieden. In dieser Betriebsart ist der Druck und Durchfluss am Ausfluss 20 nahezu konstant, wenn die Zuflüsse K, W auch eine entsprechende Konstanz aufweisen. Es kann dabei zu leichten Oszillationen der Mischtemperatur kommen, da das Durchflussverhältnis wie die Steuersignale gegenläufig oszillieren. Durch eine entsprechend grossvolumige Ausbildung des Mischkanals 18 bzw. eines nicht gezeigten Mischbehälters kann dieser Effekt leicht ausgeglichen werden.

In einer zweiten Betriebsart kann die intermittierende Folge von Öffnungs- und Schliessvorgängen für beide Pilotventile 12, 12' gleichläufig sei. Das heisst, dass beide Pilotventile 12, 12' sich gleichzeitig in der Öffnungsstellung oder Schliessstellung befinden. Öffnungsund Schliesssignale wechseln sich damit ausschliesslich zeitlich ab und sind gleich für die beiden Pilotventile 12, 12'. In dieser Betriebsart ist die Mischtemperatur nahezu konstant, wenn die Temperatur in den Zuflüssen K, W auch entsprechend konstant ist. Es kann in dieser Betriebsart zu leichten Oszillationen des Mischwasserausflusses kommen, da das Durchflussverhältnis, wie die Steuersignale, gleichläufig oszillieren. Ebenfalls durch ein entsprechendes Volumen des Mischkanals 18 bzw. eines nicht dargestellten Mischbehälters kann dieser Effekt leicht ausgeglichen werden.

Alternativ kann die zeitliche Abfolge von Steuersignalen zwischen beiden Pilotventilen 12, 12' unabhängig von einander mit einer beliebigen festen oder zeitlich variablen Phasenverschiebung sein.

Mit dem erfindungsgemässen Stellglied ist es somit möglich, durch eine intermittierende Folge von Steuersignalen das Ventil eines Stellgliedes derart anzusteuern, dass dessen Verschlusselement eine quasistationäre Zwischenstellung einnimmt. Als Pilotventil ist dazu ein lediglich zwei Ruhestellungen einnehmendes Ventil, beispielsweise mit einem Elektromagneten als Antriebselement, ausreichend. Ein derartiges Stellglied besteht aus einer geringen Anzahl von Einzelteilen und kann somit kostengünstig hergestellt werden. Zudem ist eine Ansteuerung mittels elektrischer Pulse, die in der Steuereinheit 70 erzeugt werden, mit sehr einfachen elektrischen bzw. elektronischen Komponenten zu realisieren und damit ebenfalls sehr kostengünstig herzustellen.

## Patentansprüche

1. Stellglied zum Einstellen eines Flusses von Medien mit mindestens einem Ventil (10, 10'), das ein Verschlusselement (36) und einen Ventilsitz (52) aufweist, die derart zusammenwirken, dass sie zum Sperren des Flusses eine geschlossene Stellung und zum Durchlass des Flusses eine offene Stellung einzunehmen imstande sind, wobei das Ventil (10, 10') gesteuert ist durch einen hydraulischen oder pneumatischen Steuerkreis mit einem Pilotventil (12, 12') und einem Servoraum (44), **dadurch gekennzeichnet, dass**
das Pilotventil (12, 12') auf Steuersignale anzusprechen imstande ist und der Servoraum (44) und/oder das Verschlusselement (36) derart ausgebildet sind, dass das Verschlusselement (36) bei zeitlich modulierten Steuersignalen für das Pilotventil (12, 12') eine quasistationäre Stellung zwischen der geschlossenen Stellung und offenen Stellung einnimmt.

2. Stellglied nach Anspruch 1, **dadurch gekennzeichnet, dass** die Steuersignale für das Pilotventil (12, 12') zeitlich mit einer Frequenz moduliert sind, die höher, vorzugsweise um ein Vielfaches höher, ist als das Inverse der Dauer eines Öffnungs- und Schliessvorganges des Ventils.

3. Stellglied nach einem der Ansprüche 1 und 2, **dadurch gekennzeichnet, dass** die Frequenz der Steuersignale für das Pilotventil (12, 12') 0.2 bis 10Hz, vorzugsweise 2 bis 5Hz, beträgt.

4. Stellglied nach einem der Ansprüche 1 bis 3, **gekennzeichnet durch** eine Steuereinrichtung (70) zur Erzeugung von Steuersignalen zur Ansteuerung des Pilotventils (12, 12') mit einem vorbestimmten Takt und einer vorbestimmten Pulsbreite.

5. Stellglied nach Anspruch 4, **gekennzeichnet durch** eine Schnittstelle zur externen Vorgabe der Pulsbreite der Steuersignale.

6. Stellglied nach einem der Ansprüche 1 bis 5, **dadurch gekennzeichnet, dass** das Verschlusselement (36) membran- oder kolbenförmig mit einem daran stromabwärts befestigten Schliesskörper (32) ausgebildet ist.

7. Stellglied nach Anspruch 6, **dadurch gekennzeichnet, dass** der Schliesskörper (32) halbkugelförmig ist.

8. Stellglied nach Anspruch 6, **dadurch gekennzeichnet, dass** der Schliesskörper (32) kegel- oder kegelstumpfförmig ist.

9. Stellglied nach Anspruch 8, **dadurch gekennzeichnet, dass** der Schliesskörper (32) eine konkave oder konvexe Mantelfläche aufweist.

10. Stellglied nach Anspruch 6, **dadurch gekennzeichnet, dass** der Schliesskörper (32) ein geschlitzter, membranseitig geschlossener Zylinder ist.

11. Stellglied nach Anspruch 6, **dadurch gekennzeichnet, dass** der Schliesskörper (32) eine tellerförmige Grundfläche (76) mit trapezförmige Flügeln (72) aufweist, die radial von einer Achse (74), welche nahezu senkrecht auf der Grundfläche (76) steht und durch den Tellermittelpunkt verläuft, wegstehen.

12. Stellglied nach einem der Ansprüche 1 bis 11, **dadurch gekennzeichnet, dass** das Stellglied zum Mischen von Medien mindestens zwei Eingangsöffnungen mit je einem Ventil 10, 10'), betätigt von je einem dazugehörigen Steuerkreis mit einem Pilotventil (12, 12') und einem Servoraum (44), einen Mischkanal (18) und eine Ausfluss(20) umfasst.

13. Stellglied nach Anspruch 12, **dadurch gekennzeichnet, dass** zum Einstellen eines zeitlich nahezu konstanten Staudrucks im Mischkanal (18) die Pilotventile (12, 12') derart zeitlich gegeneinander versetzt angesteuert sind, dass die Verschlusselemente (36) der Ventile (10, 10') gegenläufige Öffnungs- und Schliessbewegungen ausführen.

14. Stellglied nach einem der Ansprüche 12 und 13, **dadurch gekennzeichnet, dass** das Stellglied Teil eines thermostatischen Regelkreises ist, bei dem die Mischtemperatur des Mediums in Abhängigkeit von Temperaturdaten, die von einem im Mischkanal (18) oder im Ausfluss (20) befindlichen Temperatursensor gemessen werden, geregelt ist.

15. Verfahren zum Betrieb eines Stellgliedes gemäss einem der Ansprüche 1 bis 14 **dadurch gekennzeichnet, dass** das Pilotventil (12, 12') mittels zeitlich modulierten Steuersignalen derart gesteuert wird, dass das Verschlusselement (36) des Ventils (10, 10') einen quasistationäre Stellung zwischen der geöffneten und geschlossenen Stellung einnimmt.

16. Verfahren nach Anspruch 15 **dadurch gekennzeichnet, dass** zwei Ventile (10, 10') mit je einem hydraulischen oder pneumatischen Steuerkreis vorhanden sind, wobei die Pilotventile (12, 12') derart zeitlich gegeneinander versetzt angesteuert sind, dass die Verschlusselemente (36) der Ventile (10, 10') nahezu gegenläufig Öffnungs- und Schliessbewegungen ausführen.

17. Verfahren nach Anspruch 15 **dadurch gekennzeichnet, dass** zwei Ventile (10, 10') mit je einem hydraulischen oder pneumatischen Steuerkreis vorhanden sind, wobei die Pilotventile (12, 12') zeitlich derart angesteuert sind, dass die Verschlusselemente (36) der Ventile (10, 10') nahezu gleichzeitig Öffnungs- und Schliessbewegungen ausführen.
